# EUROPEAN PATENT APPLICATION

(11) **EP 1 787 733 A2**
(43) Date of publication of application: **23.05.2007**
(21) Application number: 06397023.0
(22) Date of filing: 12.10.2006
(51) Int. Cl.: B08B 17/00, B23Q 11/00, B26D 7/18, B65D 90/48, B28B 1/02

(54) **Method and apparatus for collecting waste concrete**

(30) Priority: 18.11.2005 FI 20051177
(71) Applicant: Elematic Oy Ab, 37801 Toijala (FI)
(72) Inventor: Seppänen, Aimo, 37700 Sääksmäki (FI)
(74) Representative: Matilainen, Mirja Helena

(57) **Abstract**

A method and an apparatus for collecting waste concrete, where slipform cast and eventually precut concrete product are led to a sawing station (3), where the concrete product is subjected to desired sawing processes and the sawn product is led out of the sawing station (3) by means of a conveyor line (2), after which the sawn concrete products are lifted away from the conveyor line (2) while leaving the waste concrete produced by sawing on the conveyor belt to be moved along the conveyor line to a collecting container (4) of waste concrete. In solution in accordance with the invention the filling of the collecting container of waste concrete is monitored and the feeding of the waste concrete is controlled based on the filling.

## Description

The present invention relates to collecting waste concrete originating from the manufacturing of concrete elements made by slipforming technique. More precisely, the invention relates to a method and an apparatus for collecting waste concrete in connection with the sawing of concrete elements.

Prestressed hollow-core slabs and other concrete products produced by slipforming have been traditionally cast on beds, in other words, casting beds having a length of 100 to 150 meters. After the hardening, the long continuous cast product has been cut to delivery lengths with a diamond saw. If necessary, also the reduction of the slab has been performed by sawing the slab on the casting bed. At least the head end and the tail end of the long cast product remain as waste concrete. In addition, waste concrete is generated by waste pieces by reductions and splitting and by pieces coming from the formation of big gaps and openings. Usually these waste concrete pieces have been collected separately from the casting bed to a roll-off waste container, said collecting delaying considerably the preparation of the casting bed for the next casting process.

One solution known in the art for solving the above mentioned problem is to lift the long hardened slabs as a whole or precut into two or three pieces from the casting bed and to move them to a conveyor that transports the slabs to a separate sawing station to be sawn. The final sawing into delivery lengths happens in the sawing station located on the conveyor line. The waste concrete produced by the sawing of the slab is led from the sawing station directly to the space reserved for it, like onto an open-top waste container. In that way, no waste pieces remain on the casting bed and the preparation of the casting bed for the next cast will be significantly quicker.

A drawback with this kind of a sawing station of prior art, operating in connection with the conveyor and related to the removing of waste concrete, is the filling of the waste container. The waste container is usually located at the end of the conveyor line, where the waste concrete is conveyed along the conveyor line after the ready products have been removed from the conveyor line. The conveyor fills the waste container with waste concrete pieces only at one point, whereby only one part of the waste container will be filled until it needs to be changed.

In the present invention, the filling of the waste container is monitored and the waste container is moved based on course of the filling, so as to optimize the filling of the waste container. When long pieces of waste concrete, produced usually by splitting of the slab, move through the conveyor to the waste container, the waste container preferably moves together with the waste piece with the same speed as the conveyor, to make sure that the long waste concrete piece ends up to the waste container as a whole.

More precisely, the method according to the invention is characterized by what is stated in the characterizing part of Claim 1, and the apparatus according to the invention is characterized by what is stated in the characterizing part of Claim 4.

The invention will be described by way of example in more detail in the following with reference to the enclosed drawing, wherein

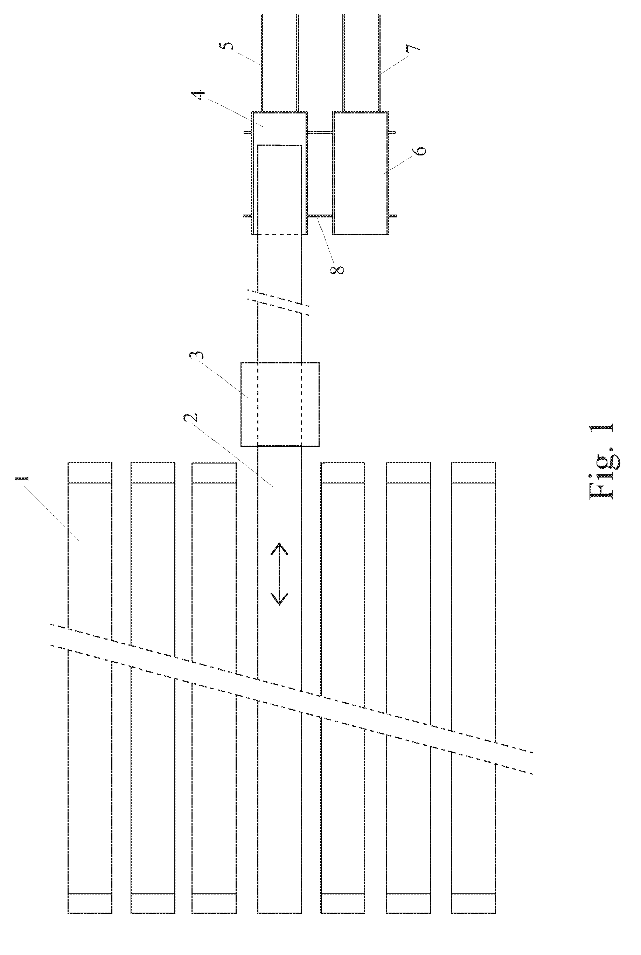

Figure 1 shows schematically one solution according to the invention combined with a production plant of concrete products, as a top view.

In the production plant of concrete products, like hollow-core slabs, shown by Figure 1, the concrete products are cast by slipforming process onto casting beds 1, having usually a length of 100 to 150 m. After the hardening of the long concrete products produced by slipform casting, they are lifted either as such or eventually precut, to a conveyor line 2 moving the concrete products to the sawing station 3. In the solution shown in the Figure, the sawing station is located onto a conveyor line, said conveyor line continuing through the sawing station. Depending on the concrete products to be produced, it may be necessary to saw one and the same slipform concrete product many times, whereby the concrete product is moved back and forth through the sawing station several times. When the concrete product is ready sawn, it is moved out from the sawing station to the other side of the sawing station along the conveyor line, from where the ready sawn products are lifted and taken to the stock. The sawn waste produced by the sawing, in other words the waste concrete, remains on the conveyor line and moves along it to the waste container 4 at the end of the conveyor line.

In the solution according to the invention, the waste container 4 is located partly under the conveyor line 2 so that it can be moved with respect to the end of the conveyor line 2. In the example of Figure 1, the waste container is moved by means of a waste container conveyor 5 which can be for example a chain conveyor. The filling of the waste container is monitored and controlled for example with a camera and/or light sensors.
The empty waste container is located first to the end of the conveyor belt so that first the farthest end of the waste container from the end of the conveyor line is filled while the rest part of the waste container is located under the conveyor line. When this point of the waste container is filled up to the predetermined degree of filling, the waste container is moved forward by means of the waste container conveyor. This forward moving can be automated for example by means of an automatic control system of the waste container or the personnel of the production plant can be informed with light and/or sound signals to move the waste container forward. When the waste container is filled, it is moved by means of the waste container conveyor away from the end of the conveyor line to be emptied.

An empty waste container 6 is arranged ready to an empty waste container conveyor 7 adjacent to the waste container 4 to be filled, so that it can be moved quickly to the end of the conveyor line 2 to be filled with waste concrete by means of the transport conveyor 8 after the waste container 4 filled with waste concrete has been moved to be emptied.

The changing of the waste containers can be performed automatically, or the personnel of the production plant can be informed about the need of changing by means of light and/or sound signals, so that the personnel would change the waste container after the waste container 4 to be filled has been filled with waste concrete.

With the solution according to the invention, also the leading of long waste concrete pieces to the waste container can be solved advantageously, said long waste concrete pieces being produced for example when concrete products are sawn lengthwise. Thereby, when a long waste concrete piece comes to the end of the conveyor line 2, the waste container 4 starts to follow the end of the waste concrete piece moving with the piece further from the end of the conveyor line. In this way the long waste concrete piece as a whole is able to drop into the waste container and fits thereto.

This kind of a solution can be implemented for example by monitoring the turning of the saw blade of the sawing station 3 to the splitting position. This kind of monitoring of the saw blade position can be arranged simply for example by means of a limit switch. The information from the limit switch about starting of splitting is communicated to the system controlling the location of the waste container 4 with respect to the end of the conveyor line 2, said system moving the waste container under the conveyor line so that the back wall of the waste container is substantially at the end of the conveyor line and the waste container is located substantially under the conveyor line as a whole.

Substantially at the end of the conveyor line 2 there is arranged a system based on, for example, limit switches or light cells for monitoring the length of the piece in order to determine the instant of time, when the front end of the long waste concrete piece produced by the splitting reaches the end of the conveyor line. This determined instant of time is communicated to the system controlling the waste container for starting to move the waste container farther from the end of the conveyor line 2 at the same speed as the conveyor line, in other words so that the waste container 4 follows the long waste concrete piece, whereby the front end of the piece is substantially at the back wall of the waste container so that the front end, however, remains within the walls of the waste container.

The solution arranged onto the tail end of the conveyor 2 for monitoring the length of the piece also gives information to the system controlling the waste container 4, that the tail end of the piece has passed the tail end of the conveyor line, whereby the long waste concrete piece has dropped onto the waste container, and the waste container moves to the normal filling mode and position, or alternatively to be emptied.

The monitoring of the filling of the waste container is preferably provided so that the horizontal level defined by the walls of the waste container is monitored at a suitable point by means of light cells or corresponding sensors, so that when the waste concrete piled up onto the waste container exceeds the level of the wall edges, said sensors give a sign about the need of emptying the waste container, or communicate the information to the control system of the waste container that moves the waste container to dumping and the new waste container to the end of the conveyor line to be filled.

The solution according to the invention can advantageously also be implemented so that separate waste containers are reserved for long waste concrete pieces and the other concrete wastes, respectively. In that way the waste containers can be changed to be suitable for both waste types for example based on the position information of the saw of the sawing station.

In the solution according to the invention, the transfer speed of the waste container 4 with respect to the speed of the conveyor line 2 is preferably monitored for example by means of a logic unit and pulse sensors located in the conveyor line and the waste container conveyor 5.

Preferably the solution according to the invention also comprises an automatic control system of the waste container for automating the operations described above.

## Claims

1. A method for collecting waste concrete, where slipform cast and eventually precut concrete product are led to a sawing station, where the concrete product is subjected to desired sawing processes and the sawn product is led out of the sawing station by means of a conveyor line, after which the sawn concrete products are lifted away from the conveyor line while leaving the waste concrete produced by sawing on the conveyor belt to be moved along the conveyor line to a collecting container of waste concrete, **characterized in that** the filling of the collecting container of waste concrete is monitored and the feeding of the waste concrete is controlled based on the filling.

2. A method according to Claim 1, **characterized in that** the collecting container of waste concrete is moved with respect to the conveyor line based on the monitoring of the filling.

3. A method according to Claim 1 or 2, **characterized in that** the collecting container of waste concrete is moved with respect to the conveyor line with the same speed as the conveyor line moves waste concrete to the collecting container.

4. An apparatus for collecting waste concrete, said apparatus comprising a conveyor line (2) for transporting slipform-cast and sawn concrete products out of the sawing station (3) together with the waste concrete, and a collecting container (4) of waste concrete, to which the waste concrete is led from the conveyor line, **characterized in that** the apparatus comprises means for monitoring the filling of the collecting container and means (5) for moving the collecting container (4) with respect to the conveyor line (2).

5. An apparatus according to Claim 5, **characterized in that** apparatus comprises means for giving a light and/or sound signal upon filling of the collecting container (4).

6. An apparatus according to Claim 4 or 5, **characterized in that** the apparatus comprises means for monitoring the length of the waste concrete piece to be transferred on the conveyor line (2) to the collecting container (4) and means (5) for controlling the collecting container with respect to the end of the conveyor line based on the length of the waste concrete piece.

7. An apparatus according to Claim 6, **characterized in that** the means for determining the length of the concrete piece comprise a light cell and/or a limit switch located substantially on the area of the end of the conveyor line (2).

8. An apparatus according to Claim 6 or 7, **characterized in that** the apparatus comprises a limit switch for determining the position of the saw in the sawing station (3).

9. An apparatus according to any of the Claims from 4 to 8, **characterized in that** the apparatus comprises an automatic system for monitoring the filling of the collecting container (4), for moving the collecting container with respect to the end of the conveyor line (2) and/or for moving the collecting container to be emptied and for moving an empty collecting container to the end of the conveyor line.
